# EUROPÄISCHE PATENTSCHRIFT

(11) **EP 3 825 370 B1**
(45) Veröffentlichungstag und Bekanntmachung des Hinweises auf die Patenterteilung: **11.11.2026**
(21) Anmeldenummer: 20180874.8
(22) Anmeldetag: 18.06.2020
(51) Int. Cl.: C09J 5/06, C09J 11/04

(54) **SCHMELZKLEBSTOFF SOWIE DESSEN VERWENDUNG**
MELT ADHESIVE AND ITS USE
ADHÉSIF THERMOFUSIBLE AINSI QUE SON UTILISATION

(30) Priorität: 20.11.2019 DE 102019131368
(43) Veröffentlichungstag der Anmeldung: 26.05.2021
(73) Patentinhaber: MM Infra GmbH & Co. KG, 52249 Eschweiler (DE)
(72) Erfinder: Casaretto, Rainer, 53773 Hennef (DE); Michael, Mathey, 52249 Eschweiler (DE)
(74) Vertreter: Kohlmann, Kai

(56) Entgegenhaltungen:
- EP-A1- 2 636 327
- EP-A1- 2 740 778
- EP-A2- 0 316 557
- WO-A1-2011/110527
- WO-A2-90/10679
- DE-T2- 69 902 632
- US-B2- 10 099 458

## Beschreibung

Die Erfindung betrifft einen physikalisch abbindenden, mittels Mikrowellenstrahlung aktivierbaren Schmelzklebstoff sowie dessen Verwendung.

Schmelzklebstoffe sind lösungsmittel- beziehungsweise wasserfreie thermoplastische Polymere, die bei Raumtemperatur in ausgehärteter Form und bei erhöhter Temperatur, der Verarbeitungstemperatur, als viskose Flüssigkeit vorliegen. Die viskose Flüssigkeit wird auf die Klebefläche der Fügeteile aufgebracht und verfestigt sich reversibel bei Abkühlung und stellt eine feste Verbindung zwischen den Fügeteilen her.

Schmelzklebstoffe lassen sich in physikalisch und chemisch abbindende Klebstoffe unterteilen. Die vorliegende Erfindung betrifft physikalisch abbindende Schmelzklebstoffe umfassend ein lösungsmittelfreies thermoplastisches Basispolymer. In Hochleistungs-Schmelzklebstoffen kommen insbesondere Polyamide, Polyester und Polyimide als Basispolymere zum Einsatz. In sogenannten Massen-Schmelzklebstoffen werden insbesondere Ethylen-Vinylacetat-Copolymere und Polyolefine als Basispolymer verwendet. Zur Gewährleistung bestimmter Funktionalitäten kann der Schmelzklebstoff Zusätze enthalten, wie beispielsweise Stabilisatoren und Rheologiehilfsmittel.

Die DE 102 17 767 A1 offenbart ein Verfahren und eine Anlage zum Beschichten einer Materialbahn mittels eines Klebers im Durchlauf durch eine Bestrahlungszone hindurch, in welcher Klebstoff mittels Wärme aktiviert wird. Um den Energieverbrauch zur Aktivierung zu reduzieren wird ein Klebstoff verwendet, der mittels Mikrowellenstrahlung in einen Frequenzbereich zwischen 300 MHz und 300 GHz erwärmbare Bestandteile enthält. Der Klebstoff kann in Form einer Bahn oder in Form eines Pulvers oder Granulats auf die Materialbahn aufgebracht werden. Auf die mit dem Klebstoff beschichtete Seite der Materialbahn wird eine damit zu verbindende Werkstoffbahn aufgebracht. Anschließend werden beide Bahnen durch eine Bestrahlungszone hindurchgeführt, wobei die Materialbahn und die Werkstoffbahn mittels der Mikrowellen durchstrahlbar sind. Der Klebstoff wird mittels der Mikrowellenenergie in der Bestrahlungszone erhitzt und aktiviert, während die gesamte Peripherie der Bestrahlungszone, insbesondere auch die zu beschichtende Materialbahn und die Werkstoffbahn die Mikrowellenstrahlung nicht absorbieren. Angaben zur Zusammensetzung des Klebstoffs lassen sich dem Dokument nicht entnehmen.

Die US 2008/0156427 A1 offenbart Klebstoffzusammensetzungen mit mikrowellenabsorbierenden Stoffen im Zusammenhang mit der Herstellung von Laminaten. Die mikrowellenabsorbierenden Stoffe absorbieren Mikrowellenstrahlung und heizen die Klebstoffzusammensetzung auf, deren Schmelze die Substrate eines Laminats miteinander verbindet. Als Beispiele für die mikrowellenabsorbierenden Stoffe in der Klebstoffzusammensetzung werden unter anderem Kohlenstoffe und Graphit genannt.

Die EP 0 316 557 A2 offenbart eine trockene Schmelzklebstoffzusammensetzung, die eine oder mehrere thermoplastische Polymere als Bindemittelbasis sowie eine mikrowellenaktivierbare Komponente in Form einer elektrisch leitfähigen Substanz aufweist. Als elektrisch leitfähige Substanz kann Graphit in einem Mengenanteil von 2-40 Gew. % bezogen auf die trockene Klebstoffmasse vorgesehen sein. Die Einwirkung von Mikrowellen auf den trockenen Schmelzklebstoff mit der mikrowellenaktivierbaren Komponente führt zu einer erhöhten Aufheizrate gegenüber einem entsprechenden trockenen Schmelzklebstoff ohne diese Komponente.

Die US 10,099,458 B2 offenbart einen mittels elektromagnetischer Strahlung aktivierbaren Klebstoff in den exfolierte Graphit-Nanoplättchen (XGNP) eingebettet sind, wobei der Anteil des XGNP 3-Gew. % des als Klebstoffmatrix verwendeten thermoplastischen Polymers beträgt. Die Aktivierung erfolgt beispielsweise in einem Frequenzbereich zwischen 5,8 GHz bis 7 GHz oder bei 2,45 GHz. Das thermoplastische Polymer des Klebstoffs ist ein extrusionsfähiges Polyamid-6 (oder Nylon-6), das durch physikalische Härtung aushärtet.

Obwohl aus den vorgenannten Dokumenten mittels Mikrowellenstrahlung aktivierbare Schmelzklebstoffe bekannt sind, sind diese am Markt nicht verfügbar. Der Anmelder hat Versuche mit Schmelzklebstoffen auf der Basis eines thermoplastischen Basispolymers durchgeführt, in die zur Erhöhung der Mikrowellenabsorption Kohlenstoff- oder Rußpartikel eingebettet wurden. Bei der Bestrahlung des Schmelzklebstoffs mit Mikrowellenstrahlung wurde beobachtet, dass eine vergleichsweise große Menge von mehr als 5 Gew.-% von gröberen Kohlenstoff- oder Rußpartikeln bezogen auf die Masse des Schmelzklebstoffs benötigt wird, um eine ausreichende Absorption der Mikrowellenstrahlung für das Aufschmelzen des Schmelzklebstoffs zu erreichen. Bei diesen benötigten Mengen führten die eingebetteten, gröberen Partikel teilweise zu einer lokalen Überhitzung der Fügeteile und/oder des Polymers. Feinere Partikel bewirkten indes, dass die Viskosität des Schmelzklebstoffs bereits bei geringen Mengen von 0,01 bis 0,03 Gew.-% bezogen auf die Masse des Schmelzklebstoffs stark anstieg, so dass sich der Schmelzklebstoff nicht mehr verarbeiten ließ, insbesondere eine Verarbeitung im Schmelzspinnverfahren nicht möglich war. Ein weiteres Problem stellte die Dispergierung der feinen Partikel in dem Polymer aufgrund der hohen Scherkräfte dar.

Ausgehend von diesem Stand der Technik liegt der Erfindung die Aufgabe zugrunde, einen mittels Mikrowellenstrahlung aktivierbaren Schmelzklebstoff zu schaffen, bei dessen Verarbeitung lokale Überhitzungen vermieden werden und der zugleich gut zu verarbeiten ist, insbesondere im Schmelzspinnverfahren.

Die Lösung basiert auf dem Gedanken, expandiertes Graphit als Absorber für die Mikrowellenstrahlung vorzusehen, wobei die Masse des expandierten Graphits 0,05 % bis 5 Gew.-% der Masse des Schmelzklebstoffs beträgt.

Expandierter Graphit im Sinne der Erfindung ist ein durch Interkalation von Schwefel- oder Stickstoffverbindungen chemisch modifiziertes Graphit, welches durch thermische Behandlung auf das 100- bis 500-fache des Ausgangsvolumens vor der thermischen Behandlung expandiert ist.

Ein Verfahren zur Herstellung eines expandierten Graphits mit dem vorgenannten erhöhten Expansionsvolumen ist beispielsweise aus der EP 1 491 497 A1 bekannt. Zur Herstellung des expandierten Graphits unterzieht man den interkalierten Graphit einer pulsierenden Verbrennung in einem Pulsationsreaktor. Der für die pulsierende Verbrennung eingesetzte interkalierte Graphit wird durch die Behandlung des Graphits mit einer starken Säure, bevorzugt konzentrierter Schwefelsäure, in Verbindung mit einem Oxidationsmittel oder durch Behandlung mit konzentrierter Salpetersäure erhalten. Bei der Herstellung des expandierten Graphits unter Wärmeeinwirkung werden die Graphitschichten auseinandergedrängt. Die Schichtbeweglichkeit nimmt zu und die Wärmeleitfähigkeit im Vergleich zu dem unbehandelten Graphit vervierfacht.

Die blättchenförmige Struktur des expandierten Graphits in Verbindung mit der großen spezifischen Oberfläche von mehr als 20 m²/g trägt dazu bei, dass die für die Mikrowellenstrahlung wirksame Oberfläche sehr groß ist. In Verbindung mit der erhöhten Wärmeleitfähigkeit wird der Schmelzklebstoff von den Absorbern ohne lokale Überhitzung der Fügeteile und/oder des Polymers aufgeschmolzen. Aufgrund der besonderen Eigenschaften des expandierten Graphits reichen bereits geringe Mengen des expandierten Graphits im Bereich von 0,05 bis 5 Gew.-% bezogen auf die gesamte Masse des Schmelzklebstoffs aus, um den Schmelzklebstoff mittels Mikrowellenstrahlung zu aktivieren. Ein die Verarbeitbarkeit beeinträchtigter Anstieg der Viskosität wird vermieden.

Für eine einwandfreie Dispergierung des expandierten Graphits in lösungsmittelfreien thermoplastischen Basispolymeren von Schmelzklebstoffen hat sich ein Aspektverhältnis der Teilchen des expandierten Graphits in einem Bereich von 500:1 bis 1000:1 als optimal herausgestellt. Bei Teilchen mit blättchenförmiger Schichtstruktur beschreibt das Aspektverhältnis das Verhältnis der gemittelten Durchmesser zur gemittelten Höhe der Teilchen. Um das gewünschte Aspektverhältnis einzustellen kann der expandierte Graphit zur Einstellung der Teilchengröße vermahlen werden, bevor das Basispolymer und der expandierte Graphit sowie etwaige Zusatzstoffe gemischt werden.

Der Absorptionsgrad des expandierten Graphits für eine Mikrowellenstrahlung in einem Frequenzbereich von 300 MHz bis 300 GHz ist um ein Vielfaches höher als der Absorptionsgrad des Basispolymers für die Mikrowellenstrahlung.

Der Schmelzklebstoff umfasst Basispolymere, deren Verarbeitungstemperatur unter 250°C liegt. Dies sind insbesondere
- Polyamide (PA) und deren Co-Polymere (Co-PA)
- Polyethylene (PE) und deren Co-Polymere (Co-PE)
- Polypropylene (PP) und deren Co-Polymere (Co-PP)
- amorphe Polyalphaolefine (APAO) und deren Co-Polymere (Co-APAO)
- Ethylenvinylacetat-Copolymere (EVAC/EVA)
- Polyester-Elastomere (TPE-E) und deren Co-Polymere (Co-TPE-E)
- Polyurethan Elastomere (TPE-U) und deren Co-Polymere (TPE-U)
- Thermoplastische Polyurethane (TPU) und deren Co-Polymere (Co-TPU)
- Vinylpyrrolidon/Vinylacetat-Copolymere
- Epoxy-Polyester
- PTFE und dessen Kombinationen mit anderen Hotmelts
- Multikomponenten Hotmelt-Systeme (z.B. Ternary)
- Biologisch abbaubare Polymere
   - Polylactid (PLA) und deren Co-Polymere (Co-PLA)
   - Polyhydroxybutyrat (PHB) und deren Co-Polymere (Co-PHB)
   - Polyhydroxyvalerat (PHV) und deren Co-Polymere (Co-PHV)
   - Co-Polymere aus PHB und PHV (PHBV)

Bevorzugt enthält der erfindungsgemäße Schmelzklebstoff als Basispolymer ein Ethylenvinylacetat-Copolymer (EVAC/EVA).

Die eigentlichen Eigenschaften des Schmelzklebstoffs in Bezug auf Adhäsion, Kohäsion und Temperaturverhalten werden von dem oder den Basispolymeren bestimmt, wobei der Schmelzklebstoff zur Gewährleistung der Funktionalität oder zur Erzielung weiterer spezieller Eigenschaften verschiedene Zusätze aufweisen kann. In vorteilhafter Ausgestaltung der Erfindung enthält der Klebstoff als weitere Inhaltsstoffe Weichmacher und/oder Stabilisatoren und/oder Antioxidantien und/oder Viskositätsregulanzien und/oder einen Zusatz zur Erhöhung der Klebrigkeit und/oder Festigkeit. Harze dienen der Erhöhung der Klebrigkeit der Schmelze bei Verarbeitungstemperatur. Langkettige Phthalsäureester dienen als Weichmacher für nicht ausreichend flexible Polymere. Aromatische Amine oder Phenole dienen als Stabilisatoren oder Antioxidantien. Kreide, Schwerspat oder Titandioxid dienen der Festigkeitserhöhung. Wachse dienen als Viskositätsregulanzien.

Der erfindungsgemäße Schmelzklebstoff wird vorzugsweise in Form von Filamenten, Stapelfasern oder eines textilen Flächengebildes, eines Granulates, eines Pulvers, einer Folie oder eines Blocks konfektioniert.

Aufgrund der erfindungsgemäß relativ geringen benötigten Menge des expandierten Graphits lässt sich der erfindungsgemäße Schmelzklebstoff in einem SchmelzspinnVerfahren zu Filamenten verarbeiten. Unter Filamenten versteht man in der textilen Terminologie Fasern mit praktisch unbegrenzter Länge; sie werden daher auch als Endlosfasern bezeichnet. Auf der Basis der im SchmelzspinnVerfahren hergestellten Filamente lassen sich auch textile Flächengebilde, wie beispielsweise Vliese, Gelege oder Netze herstellen.

Sofern der erfindungsgemäße Schmelzklebstoff in Form eines Vlieses bereitgestellt werden soll, kommen bevorzugt zwei Herstellungsverfahren für das Vlies zum Einsatz:
1. Das Vlies wird unmittelbar auf einer Oberfläche durch Ablage geschmolzener Filamente und entsprechende Bewegung der Spinndüsen gebildet. Da die Filamente in diesem Zustand noch weitgehend flüssig sind, verkleben sie miteinander und bilden ein stabiles Vlies.
2. Die Filamente werden zunächst in Stapelfasern aufgeteilt, die anschließend gleichmäßig auf einer Oberfläche abgelegt und durch Anwendung von Wärme miteinander verschmolzen werden. Dabei schmelzen die obenliegenden Fasern an und verbinden sich mit den darunterliegenden Fasern, ohne dass diese vollständig aufgeschmolzen werden müssen. Es resultiert ein Vlies, welches mechanisch instabiler als das nach dem ersten Verfahren hergestellte Vlies ist.

Der erfindungsgemäße Schmelzklebstoff wird erfindungsgemäß zum Verbinden mehrerer Fügeteile verwendet. Durch Bestrahlen der zu verbindenden Fügeteile mit Mikrowellenstrahlen in einem Frequenzbereich von 300 MHz bis 300 GHz erwärmt sich der Schmelzklebstoff auf seine Verarbeitungstemperatur. Da die Fügeteile aus Materialien bestehen, welche für die Mikrowellenstrahlung weitgehend transparent sind, genügt es, dass die Mikrowellenstrahlung durch die Fügeteile hindurch auf den erfindungsgemäßen Klebstoff mit dem expandierten Graphit als mikrowellenstrahlungsabsorbierendes Material auftreffen.

Besonders vorteilhaft lässt sich der erfindungsgemäße Schmelzklebstoff zum Verbinden der Schichten eines Laminats verwenden. Der zwischen den Schichten befindliche Schmelzklebstoff wird durch die Schichten hindurch mittels der Mikrowellenstrahlung aktiviert. Zum Verbinden der Schichten eines Laminats ist es besonders vorteilhaft, wenn der Schmelzklebstoff in Form eines textilen Flächengebildes zwischen die zu verklebenden Schichten des Laminats eingebracht wird. Aus der Verwendung eines textilen Flächengebildes resultieren gegenüber einem vollflächigen Klebstoffauftrags Vorteile: Ein textiles Flächengebilde, wie beispielsweise ein Vlies, weist, bei gleicher Fläche wie eine vollflächige Klebeschicht, ein geringeres Klebstoffgewicht und daraus resultierend einen besseren Brandschutz auf. Das textile Flächengebilde ist zudem atmungsaktiv und daher zum Verkleben von Laminatschichten besonders geeignet, die eine offenzellige Struktur, beispielsweise aus offenzelligem Schaumstoff aufweisen. Darüber hinaus führt eine Verklebung mit einem textilen Flächengebilde zu einer punktuellen Verklebung, die in Verbindung mit einer relativ geringen Dicke zu einer hohen Elastizität der Klebeverbindung beiträgt, was insbesondere bei elastischen Fügeteilen von besonderer Bedeutung sein kann. Im Wesentlichen übereinstimmende Vorteile beim Verkleben der Schichten eines Laminats lassen sich erzielen, wenn der erfindungsgemäße Schmelzklebstoff in Form von Stapelfasern zwischen die zu verklebenden Schichten des Laminats vor der Aktivierung des Schmelzklebstoffs gleichmäßig eingebracht wird, beispielsweise durch einen Einstreuvorgang.

Besonders bevorzugt werden die Schichten eines Laminats in einer Doppelbandpresse mit folgenden Schritten verbunden:
- Aufbringen des Schmelzklebstoffs auf mindestens eine der Schichten vor dem Einbringen der zu verbindenden Schichten in die Doppelbandpresse,
- Bewegen der zu verbindenden Schichten zunächst durch eine Heiz- und Presszone und anschließend durch eine Abkühlzone der Doppelbandpresse ,
- Bestrahlen der zu verbindenden Schichten mit den Mikrowellenstrahlen in der Heiz- und Presszone.

Doppelbandpressen sind Anlagen für eine kontinuierliche Herstellung von Laminaten im Durchlaufverfahren. Die Schichten werden gemeinsam zwischen zwei Pressbändern durch die Doppelbandpresse geführt. Die Pressbänder werden am Ein- und Auslauf umgelenkt, dazwischen befinden sich in Transportrichtung hintereinander die Heiz- und Presszone und die Abkühlzone. Auf die Heiz- und Presszone ist mindestens ein Mikrowellenstrahler ausgerichtet, um die zu verbindenden Schichten der Mikrowellenstrahlung auszusetzen. Der in den Schmelzklebstoff eingebettete expandierte Graphit absorbiert die Mikrowellenstrahlung und erhöht die Temperatur des Schmelzklebstoffs auf dessen Verarbeitungstemperatur. Nach dem Fügen erstarrt der aufgeschmolzene Schmelzklebstoff in der Abkühlzone.

Indem in der Doppelbandpresse gezielt der expandierte Graphit erhitzt und dadurch der Schmelzklebstoff aufgeschmolzen wird, können die Schichten des Laminats mit einem deutlich geringeren Energieeintrag und damit bei einem insgesamt niedrigeren Temperaturniveau miteinander verbunden werden, als dies bei der Verbindung mit konventionellen Schmelzklebstoffen, ohne expandierten Graphit als Mikrowellenabsorber, möglich wäre. Das geringere Temperaturniveau erlaubt die Verbindung von Schichten aus temperaturempfindlicheren Materialien. Die Mikrowellenstrahlung dringt auch in Laminate mit mehr als zwei Schichten ungehindert ein und erwärmt gezielt den Schmelzklebstoff zwischen den Schichten. Ein weiterer Vorteil besteht darin, dass auf energieintensive Kühlaggregate in der Kühlzone verzichtet werden kann.

In einer weiteren Ausgestaltung der Erfindung werden der erfindungsgemäße Schmelzklebstoff und die zu verbindenden Fügeteile vorab vermischt. Anschließend wird das Gemisch auf ein unteres Pressband einer Doppelbandpresse oder auch auf eine unter Lage aufgegeben. Zum Verkleben der Fügeteile wird das Gemisch in der Heiz- und Presszone der Doppelbandpresse mit Mikrowellenstrahlen bestrahlt, und der Schmelzklebstoff auf Verarbeitungstemperatur erhitzt. In der Kühlzone erstarrt der Schmelzklebstoff und verbindet die Fügeteile miteinander.

Besonders vorteilhaft lassen sich in dieser Ausgestaltung der Erfindung Schaumstoffe, beispielsweise in Form von Flocken, zu einem Verbundmaterial verarbeiten. Als verklebbare Schaumstoffe eignen sich sowohl Schäume auf organischer als auch auf anorganischer Basis. Als organische Schaumstoffe sind beispielsweise Polyurethan-Schaumstoffe, Polyethylen-Schaumstoffe und Melaminschaumstoffe zu nennen. Als anorganische Schäume eignen sich beispielsweise geschäumtes Glas, expandierte Minerale wie Perlite und geschäumter Beton. Schließlich lassen sich in dieser Ausgestaltung der Erfindung kleinteilige textile Materialien als Fügeteile zu textilen Flächengebilden miteinander verbinden.

Nachfolgend wird die Erfindung anhand der Figuren 1 bis 5 näher erläutert. Es zeigen
- **Figur 1**: ein erstes Ausführungsbeispiel zur Herstellung eines Laminats in einer Doppelbandpresse, wobei der Schmelzklebstoff mit einer Einstreuvorrichtung aufgebracht wird,
- **Figur 2**: ein zweites Ausführungsbeispiel zur Herstellung eines Laminats in einer Doppelbandpresse, wobei der Schmelzklebstoff in Form eines Vlieses aufgebracht wird,
- **Figur 3**: ein drittes Ausführungsbeispiel zur Herstellung eines Laminats in einer Doppelbandpresse, wobei der Schmelzklebstoff mittels einer Walzenauftragseinrichtung aufgebracht wird,
- **Figur 4**: ein viertes Ausführungsbeispiel zur Herstellung eines Laminats in einer Doppelbandpresse, wobei der Schmelzklebstoff auf eine Schicht eines Laminats beidseitig in Form eines Vlieses aufgebracht wird sowie
- **Figur 5**: ein Ausführungsbeispiel zur Herstellung eines Verbundmaterials in einer Doppelbandpresse, wobei kleinteilige Fügeteile mit dem Schmelzklebstoff verbunden werden.

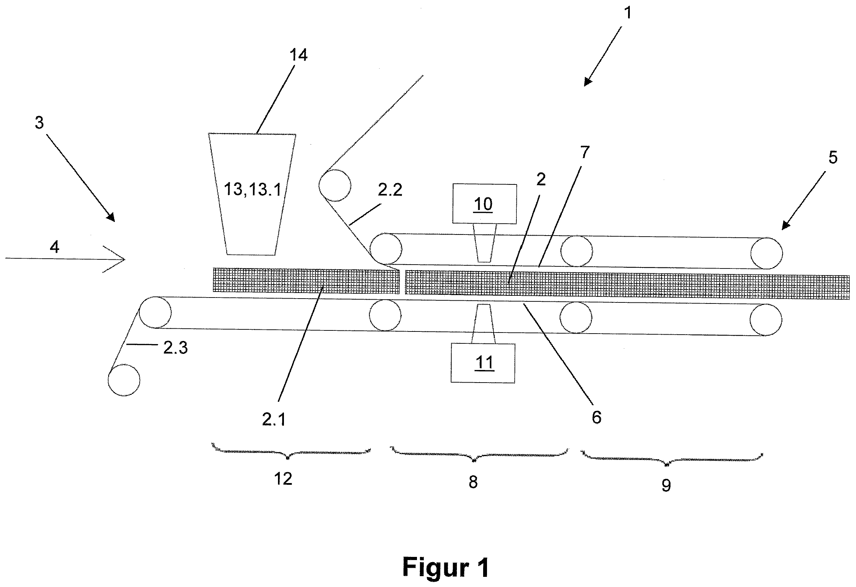

Figur 1 zeigt schematisch eine Doppelbandpresse 1 zur kontinuierlichen Herstellung von Laminaten 2 im Durchlaufverfahren, wobei die Laminate die Doppelbandpresse von einem Einlauf 3 in Transportrichtung 4 in Richtung eines Auslaufs 5 durchlaufen. Die zu verpressenden und zu verklebenden Schichten jedes Laminats 2 werden gemeinsam zwischen einem unteren Pressband 6 und einem oberen Pressband 7 der Doppelbandpresse 1 geführt. Die Pressbänder 6,7 werden am Ein- und Auslauf 3,5 umgelenkt. Zwischen den Umlenkungen befinden sich in Transportrichtung 4 hintereinander eine Heiz- und Presszone 8 und eine Abkühlzone 9. Auf die Heiz- und Presszone 8 sind zwei Mikrowellenstrahler 10,11 ausgerichtet, wobei der Mikrowellenstrahler 10 von der Oberseite und der Mikrowellenstrahler 11 von der Unterseite auf die Heiz- und Presszone 8 ausgerichtet ist. In Richtung des Einlaufs 3 ist das untere Pressband 6 verlängert und bildet dadurch einen Aufgabebereich 12, in dem die Schichten des Laminats 2 der Doppelbandpresse 1 zugeführt und Schmelzklebstoff 13 zum Verbinden der Schichten des Laminats aufgebracht wird. Der Schmelzklebstoff liegt in Form von Stapelfasern 13.1 vor.

Das Laminat 2 in dem Ausführungsbeispiel nach Figur 1 umfasst eine mittlere Schaumstoffschicht 2.1 die auf der Oberseite mit einer Kaschierschicht 2.2 und auf der Unterseite mit einer Transferkleberschicht 2.3 mit einer Silikonpapierabdeckung versehen wird. Der in Form von Stapelfasern 13.1 vorliegende Schmelzklebstoff 13 wird mittels einer im Aufgabebereich 12 oberhalb des unteren Pressbandes 6 angeordneten Einstreuvorrichtung 14 auf die Oberfläche der Schaumstoffschicht 2.1 aufgestreut. Kurz vor dem Einlauf der Schaumstoffschicht 2.1 in den Spalt zwischen unterem und oberem Pressband 6,7 wird kontinuierlich die Kaschierschicht 2.2 appliziert. Zwischen Kaschierschicht 2.2 und Schaumstoffschicht 2.1 befindet sich der eingestreute Schmelzklebstoff 13. Die Transferkleberschicht 2.3 wird in Transportrichtung 4 ausgehend vom Einlauf 3 von einer Rolle kontinuierlich abgezogen und mit der Unterseite der Schaumstoffschicht 2.1 verbunden. Beim Durchlauf des Laminats 2 durch die Heiz- und Presszone 8 wird der Schmelzklebstoff 13 durch Bestrahlen der zu verbindenden Schichten mit den Mikrowellenstrahlen der Mikrowellenstrahler 10,11 bestrahlt, wodurch sich der Schmelzklebstoff 13 auf seine Verarbeitungstemperatur erhitzt. In der sich anschließenden Abkühlzone 9 verfestigt sich der aufgeschmolzene Schmelzklebstoff und verbindet die Schichten 2.1 bis 2.3 des Laminats 2.

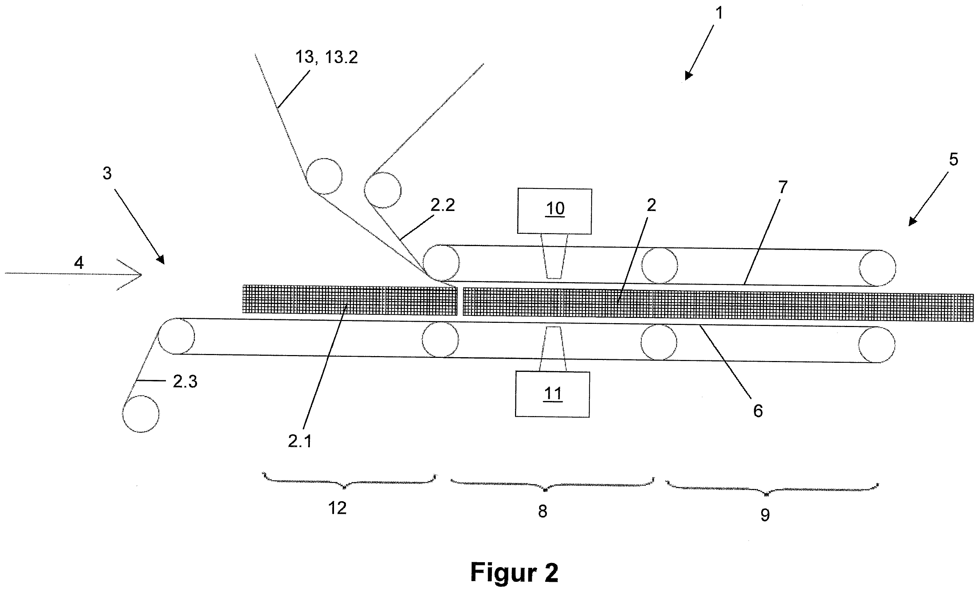

Das Ausführungsbeispiel nach Figur 2 unterscheidet sich hinsichtlich der Zuführung des Klebstoffs 13 und dessen Konfektionierung. Während nach Figur 1 der Schmelzklebstoff in Form von Stapelfasern 13.1 vorliegt, wird der Schmelzklebstoff 13 in dem Ausführungsbeispiel nach Figur 2 als Vlies 13.2 in gleicher Weise wie die Kaschierschicht 2.2 von der Oberseite aus zugeführt.

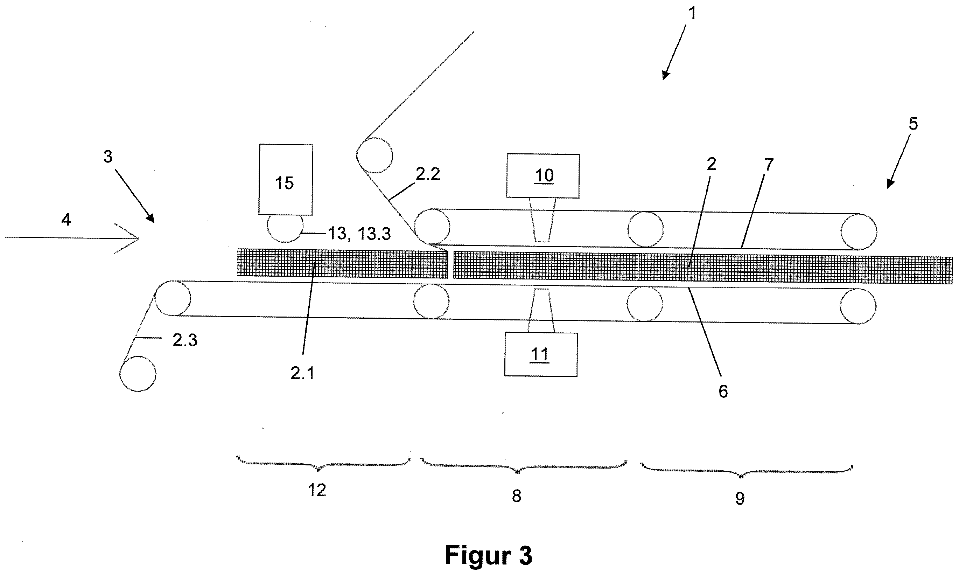

Das Ausführungsbeispiel nach Figur 3 unterscheidet sich hinsichtlich der Konfektionierung und der Art und Weise der Aufbringung des Schmelzklebstoffs 13 von den Ausführungsbeispielen nach Figuren 1 und 2. Der Schmelzklebstoff liegt in einer Form 13.3 vor, die einen Auftrag mit einer Walzenauftragseinheit 15 in dem Aufgabebereich 12 auf die Oberseite der Schaumstoffschicht 2.1 erlaubt. Die Zuführung der Kaschierschicht 2.1 und der Transferkleberschicht 2.3 erfolgt in gleicher Weise wie bei den Ausführungsbeispielen nach Figuren 1 und 2.

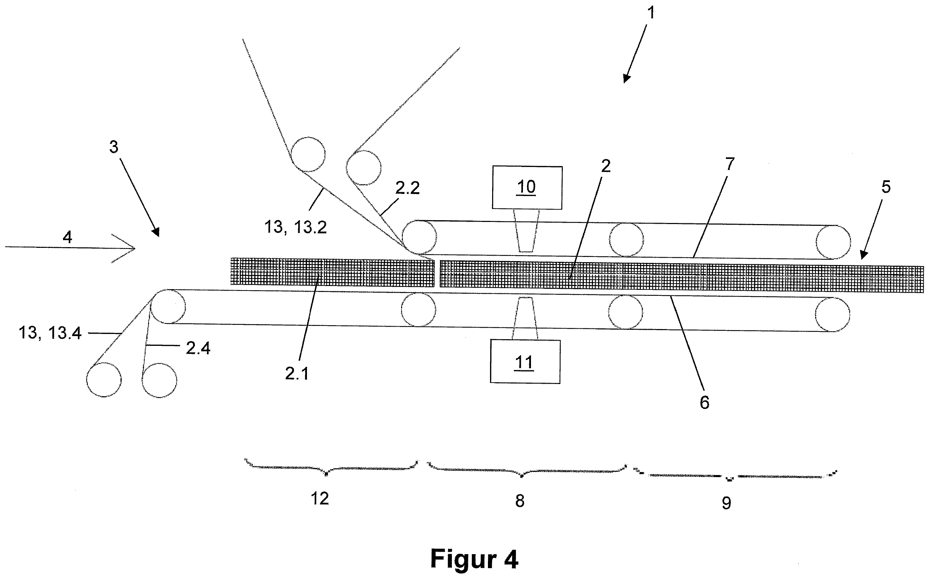

Figur 4 zeigt ein weiteres Ausführungsbeispiel zur Herstellung eines Laminats 2, bei dem die Schaumstoffschicht 2.1 nicht nur an der Oberseite mit einer Kaschierschicht 2.2, sondern auch an der Unterseite mit einer Kaschierschicht 2.4 versehen wird. Die Verbindung zwischen der unteren und der oberen Kaschierschicht 2.2, 2.4 mit der unteren beziehungsweise oberen Oberfläche der Schaumstoffschicht 2.1 erfolgt mittels eines Vlieses 13.2, 13.4 des Schmelzklebstoffs 13. Das Vlies 13.2 aus Schmelzklebstoff 13 wird von der Oberseite und das weitere Vlies 13.4 aus Schmelzklebstoff 13 von der Unterseite zugeführt.

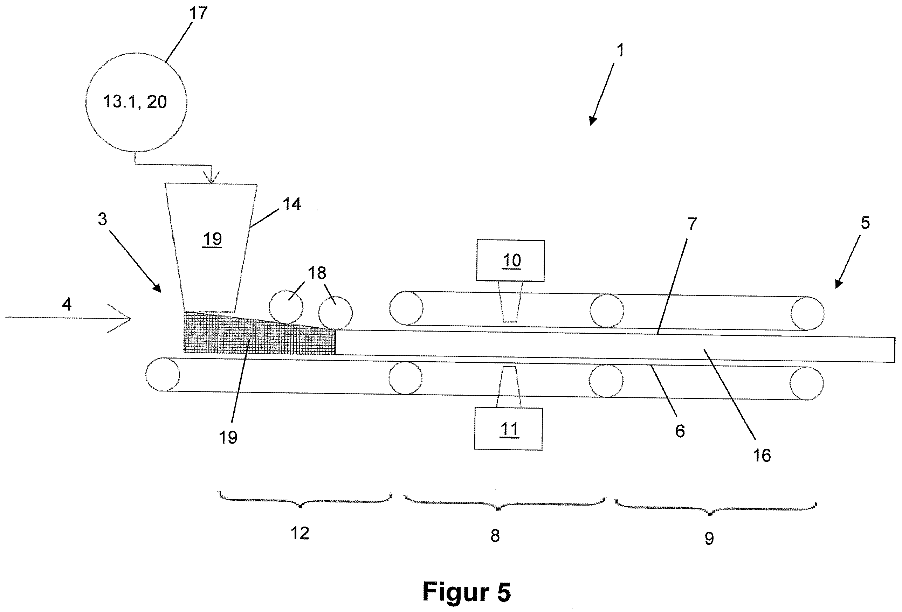

Figur 5 zeigt schließlich die Herstellung eines Verbundmaterials 16 mit Hilfe der Doppelbandpresse 1. Oberhalb der in gleicher Weise wie bei dem Ausführungsbeispiel nach Figur 1 angeordneten Einstreuvorrichtung 14 ist eine Mischvorrichtung 17 zum Mischen des Schmelzklebstoffs 13 in Form vom Stapelfasern 13.1 mit den zu verbindenden Fügeteilen des Verbundmaterials 16 angeordnet. Bei den Fügeteilen handelt es sich beispielsweise um Schaumstoffflocken, die mit dem Schmelzklebstoff 13 in Form von Stapelfasern 13.1 gemischt werden. Die Stapelfasern 13.1 aus Schmelzklebstoff 13 werden in der Mischeinheit 17 homogen beigemischt. Das Gemisch aus Schaumstoffflocken und Stapelfasern 13.1 aus Schmelzklebstoff 13 wird dann mittels der Einstreuvorrichtung 14 gleichmäßig auf das untere Transportband 6 in dem Aufgabebereich 12 aufgebracht. Zusätzlich können im Aufgabebereich 12 Walzen 18 zur Glättung der Oberfläche des Gemisches 19 angeordnet sein, bevor dieses in dem Spalt zwischen unterem und oberem Pressband 6,7 einläuft. Beim Bewegen des Gemisches 9 durch die Heiz- und Presszone 8 wird der Schmelzklebstoff 13, der gleichmäßig zwischen den Schaumstoffflocken verteilt ist aufgeschmolzen. Nach dem Aushärten des aufgeschmolzenen Schmelzklebstoffs in der Abkühlzone 9 bilden die Schaumstoffflocken das plattenförmige Verbundmaterial 16.

Erfindungsgemäß beträgt der Masseanteil des expandierten Graphits an der Masse des Schmelzklebstoffs 13 in allen Ausführungsbeispielen zwischen 0,05 % bis 5 Gew. % der Masse des Schmelzklebstoffs 13. Der Einfluss der Masse des expandierten Graphits an der Gesamtmasse des Schmelzklebstoffs 13 wurde mit folgendem Versuch untersucht:
Ein lösungsmittelfreies thermoplastisches Basispolymer (EVAC)wurde bei 170 °C in einem Alu-Gefäß mit 5,5 cm Ø aufgeschmolzen und gründlich mit dem expandierten Graphit vermischt. Die Gesamtmasse des Schmelzklebstoffs betrug in jeder Probe jeweils 10 g, wobei der Anteil des expandierten Graphits im ersten Versuch 0,1 Gew.-%, im zweiten Versuch 0,5 Gew.-%, im dritten Versuch 1 Gew.-% und im vierten Versuch 5 Gew.-% der Gesamtmasse betrug. Nach Abkühlung und Aushärtung des Schmelzklebstoffs enthaltend das thermoplastische Basispolymer und expandierten Graphit wurden die Proben für unterschiedliche Perioden von 10, 20, 30 und 40 Sekunden einer Mikrowellenstrahlung mit 700 Watt Leistung ausgesetzt. Die nach Ende der Mikrowellenbestrahlung erreichte Temperatur wurde gemessen. Dabei stellte sich heraus, dass geringere Massenanteile des expandierten Graphits an der Masse des Schmelzklebstoffs längere Bestrahlungsdauern des Schmelzklebstoffs mit der Mikrowellenstrahlung erfordern, um diesen aufzuschmelzen. Größere Massenanteile des expandierten Graphits führten zu der schnellsten Erwärmung des Schmelzklebstoffs auf seine Verarbeitungstemperatur. In den Versuchen stellte sich heraus, dass ein Masseanteil des expandierten Graphits von etwa 1 Gew.-% der Masse des Schmelzklebstoffs 13 einen optimalen Kompromiss zwischen Dauer zum Erreichen der Verarbeitungstemperatur und Belastung der Fügeteile durch die Temperatur darstellt.

| **Nr.** | **Bezeichnung** |
|---|---|
| 1 | Doppelbandpresse |
| 2 | Laminat |
| 2.1 | Schaumstoffschicht |
| 2.2 | Kaschierschicht |
| 2.3 | Transferkleberschicht |
| 2.4 | Kaschierschicht |
| 3 | Einlauf |
| 4 | Transportrichtung |
| 5 | Auslauf |
| 6 | unteres Pressband |
| 7 | oberes Pressband |
| 8 | Heiz- und Presszone |
| 9 | Abkühlzone |
| 10 | oberer Mikrowellenstrahler |
| 11 | unterer Mikrowellenstrahler |
| 12 | Aufgabebereich |
| 13 | Schmelzklebstoff |
| 13.1 | Stapelfasern |
| 13.2 | Vlies |
| 13.3 | Form des Schmelzklebstoffs |
| 13.4 | Vlies |
| 14 | Einstreuvorrichtung |
| 15 | Walzenauftragsvorrichtung |
| 16 | Verbundmaterial |
| 17 | Mischeinheit |
| 18 | Walzen |
| 19 | Gemisch |
| 20 | Fügeteile |

## Patentansprüche

1. Physikalisch abbindender mittels Mikrowellenstrahlung in einem Frequenzbereich von 300 MHz bis 300 GHz aktivierbarer Schmelzklebstoff (13) umfassend folgende Inhaltsstoffe:
- ein lösungsmittelfreies thermoplastisches Basispolymer und
- expandierter Graphit, wobei
- die Masse des expandierten Graphits 0,05% - 5 Gew.-% der Masse des Schmelzklebstoffs beträgt und
- der expandierte Graphit ein durch Interkalation von Schwefel- oder Stickstoffverbindungen chemisch modifizierter Graphit ist, welcher durch thermische Behandlung auf das 100 - 500-fache seines Ausgangsvolumens vor der thermischen Behandlung expandiert ist.

2. Physikalisch abbindender Schmelzklebstoff nach Anspruch 1, **dadurch gekennzeichnet, dass** das Basispolymer und der expandierte Graphit als Gemisch in dem Schmelzklebstoff enthalten sind.

3. Physikalisch abbindender Schmelzklebstoff nach Anspruch 1 oder 2, **dadurch gekennzeichnet, dass** der expandierte Graphit in Form von Teilchen des expandierten Graphits mit blättchenförmiger Schichtstruktur in dem Schmelzklebstoff (13) vorliegt.

4. Physikalisch abbindender Schmelzklebstoff nach Anspruch 3, **dadurch gekennzeichnet, dass** die Teilchen ein Aspektverhältnis in einem Bereich von 500(:1) bis 1000(:1) aufweisen.

5. Physikalisch abbindender Schmelzklebstoff nach einem der Ansprüche 1 bis 4, **gekennzeichnet durch** mindestens ein Basispolymer aus einer der nachfolgenden Gruppen:
Polyamide (PA) und deren Co-Polymere (Co-PA), Polyethylene (PE) und deren Co-Polymere (Co-PE), Polypropylene (PP) und deren Co-Polymere (Co-PP), amorphe Polyalphaolefine (APAO) und deren Co-Polymere (Co-APAO), Ethylenvinylacetat-Copolymere (EVAC/EVA), Polyester-Elastomere (TPE-E) und deren Co-Polymere (Co-TPE-E), Polyurethan Elastomere (TPE-U) und deren Co-Polymere (TPE-U), Thermoplastische Polyurethane (TPU) und deren Co-Polymere (Co-TPU),
Polytetrafluorethylen (PTFE), Polylactid (PLA) und dessen Co-Polymere (Co-PLA), Polyhydroxybutyrat (PHB) und dessen Co-Polymere (Co-PHB), Polyhydroxyvalerat (PHV) und dessen Co-Polymere (Co-PHV), Co-Polymere aus PHB und PHV (PHBV).

6. Physikalisch abbindender Schmelzklebstoff nach einem der Ansprüche 1 bis 5, **dadurch gekennzeichnet, dass** der Schmelzklebstoff als weitere Inhaltsstoffe Weichmacher und/oder Stabilisatoren und/oder Antioxidantien und/oder Viskositätsregulanzien und/oder einen Zusatz zur Erhöhung der Klebrigkeit und/oder Festigkeit enthält.

7. Physikalisch abbindender Schmelzklebstoff nach einem der Ansprüche 1 bis 6, **dadurch gekennzeichnet, dass** der Schmelzklebstoff (13) in Form von Filamenten, Stapelfasern (13.1) oder eines textilen Flächengebildes (13.2, 13.4), eines Granulates, eines Pulvers, einer Folie oder eines Blocks konfektioniert ist.

8. Verwendung eines Schmelzklebstoffs (13) nach einem oder mehreren der Ansprüche 1 bis 7 zum Verbinden mehrerer Fügeteile aus gleichen oder verschiedenen Materialien durch Bestrahlen der zu verbindenden Fügeteile mit Mikrowellenstrahlen in einem Frequenzbereich von 300 MHz bis 300 GHz zur Erwärmung des Schmelzklebstoffs (13) auf seine Verarbeitungstemperatur.

9. Verwendung nach Anspruch 8, **dadurch gekennzeichnet, dass** die Fügeteile Schichten eines Laminats (2) sind, die in einer Doppelbandpresse (1) mit folgenden Schritten verbunden werden:
- Aufbringen des Schmelzklebstoffs (13) auf mindestens eine der Schichten (2.1) vor dem Einbringen der zu verbindenden Schichten (2.1,2.2,2.3) in die Doppelbandpresse (1),
- Bewegen der zu verbindenden Schichten (2.1,2.2,2.3) zunächst durch eine Heiz- und Presszone (8) und anschließend durch eine Abkühlzone (9) der Doppelbandpresse (1),
- Bestrahlen der zu verbindenden Schichten (2.1,2.2,2.3) mit den Mikrowellenstrahlen in der Heiz- und Presszone (8).

10. Verwendung nach Anspruch 9, **dadurch gekennzeichnet, dass** der Schmelzklebstoff (13) in Form von Filamenten, Stapelfasern (13.1) oder eines textilen Flächengebildes (13.2,13.4) aufgebracht wird.

11. Verwendung nach einem der Ansprüche 9 oder 10, **dadurch gekennzeichnet, dass** der Schmelzklebstoff (13) auf die mindestens eine Schicht (2.1) in einer Menge zwischen 10 g/m² bis 500g/m² aufgebracht wird.

12. Verwendung nach Anspruch 8, **dadurch gekennzeichnet, dass** die Fügeteile (20) in einer Doppelbandpresse (1) mit folgenden Schritten verbunden werden
- Mischen des Schmelzklebstoffs (13) mit den zu verbindenden Fügeteilen (20) zu einem Gemisch (19),
- Aufbringen des Gemisches (19) auf mindestens ein unteres Pressband (6) der Doppelbandpresse (1),
- Bewegen des Gemisches (19) zunächst durch eine Heiz- und Presszone (8) und anschließend durch eine Abkühlzone (9) der Doppelbandpresse (1),
- Bestrahlen des Gemisches mit Mikrowellenstrahlen in der Heiz- und Presszone (8).

## Claims

1. Physically setting melt adhesive (13) which can be activated by means of microwave radiation in a frequency range from 300 MHz to 300 GHz comprising the following components:
- a solvent-free thermoplastic base polymer and
- expanded graphite, wherein
- the mass of the expanded graphite is 0.05% - 5 wt.% of the mass of the melt adhesive and
- the expanded graphite is a graphite chemically modified by intercalation of sulphur or nitrogen compounds, which is expanded by thermal treatment to 100-500 times its initial volume before the thermal treatment.

2. Physically setting melt adhesive according to Claim 1, **characterized in that** the base polymer and the expanded graphite are contained as a mixture in the melt adhesive.

3. Physically setting melt adhesive according to Claim 1 or 2, **characterized in that** the expanded graphite is present in the melt adhesive (13) in the form of particles of expanded graphite with a lamellar layer structure.

4. Physically setting melt adhesive according to Claim 3, **characterized in that** the particles have an aspect ratio in a range of 500(:1) to 1000(:1).

5. Physically setting melt adhesive according to any one of Claims 1 to 4, **characterized by** at least one base polymer from one of the following groups:
polyamides (PA) and their copolymers (Co-PA), polyethylenes (PE) and their copolymers (Co-PE), polypropylenes (PP) and their copolymers (Co-PP), amorphous polyalphaolefins (APAO) and their copolymers (Co-APAO), ethylene vinyl acetate copolymers (EVAC/EVA), polyester elastomers (TPE-E) and their copolymers (Co-TPE-E), polyurethane elastomers (TPE-U) and their copolymers (TPE-U), thermoplastic polyurethanes (TPU) and their copolymers (Co-TPU), polytetrafluoroethylene (PTFE), polylactic acid (PLA) and its copolymers (Co-PLA), polyhydroxybutyrate (PHB) and its copolymers (Co-PHB), polyhydroxyvalerate (PHV) and its copolymers (Co-PHV), copolymers of PHB and PHV (PHBV).

6. Physically setting melt adhesive according to one of Claims 1 to 5, **characterized in that** the melt adhesive contains as further components plasticizers and/or stabilizers and/or antioxidants and/or viscosity regulators and/or an additive to increase stickiness and/or strength.

7. Physically setting melt adhesive according to one of Claims 1 to 6, **characterized in that** the melt adhesive (13) is manufactured in the form of filaments, staple fibres (13.1) or a textile surface structure (13.2, 13.4), a granulate, a powder, a film or a block.

8. Use of a melt adhesive (13) according to one or more of Claims 1 to 7 for joining several components made of the same or different materials by irradiating the components to be joined with microwave beams in a frequency range of 300 MHz to 300 GHz to heat the melt adhesive (13) to its processing temperature.

9. Use according to Claim 8, **characterized in that** the parts to be joined are layers of a laminate (2) which are joined in a double-belt press (1) with the following steps:
- applying the melt adhesive (13) to at least one of the layers (2.1) before introducing the layers to be joined (2.1, 2.2, 2.3) into the double-belt press (1),
- moving the layers to be joined (2.1, 2.2, 2.3) firstly through a heating and pressing zone (8) and then through a cooling zone (9) of the double-belt press (1),
- irradiation of the layers to be joined (2.1, 2.2, 2.3) with the microwave beams in the heating and pressing zone (8).

10. Use according to Claim 9, **characterized in that** the melt adhesive (13) is applied in the form of filaments, staple fibres (13.1) or a textile surface structure (13.2, 13.4).

11. Use according to one of Claims 9 or 10, **characterized in that** the melt adhesive (13) is applied to the at least one layer (2.1) in an amount between 10 g/m² and 500 g/m².

12. Use according to Claim 8, **characterized in that** the parts to be joined (20) are joined in a double-belt press (1) in the following steps
- mixing the melt adhesive (13) with the parts to be joined (20) to form a mixture (19),
- applying the mixture (19) to at least one lower press belt (6) of the double-belt press (1),
- moving the mixture (19) firstly through a heating and pressing zone (8) and then through a cooling zone (9) of the double-belt press (1),
- irradiation of the mixture with microwave radiation in the heating and pressing zone (8).

## Revendications

1. Agent adhésif thermofusible (13) à prise physique, activable au moyen d'un rayonnement micro-ondes dans une plage de fréquences de 300 MHz à 300 GHz, comprenant les constituants suivants :
- un polymère de base thermoplastique exempt de solvant et
- un graphite expansé
- la masse du graphite expansé représentant de 0,05 % à 5 % en poids de la masse de l'agent adhésif thermofusible et
- le graphite expansé étant un graphite chimiquement modifié par intercalation de composés soufrés ou azotés, lequel a été expansé par traitement thermique jusqu'à atteindre de 100 à 500 fois son volume initial avant le traitement thermique.

2. Agent adhésif thermofusible à prise physique selon la revendication 1, **caractérisé en ce que** le polymère de base et le graphite expansé sont contenus sous la forme de mélange dans l'agent adhésif thermofusible.

3. Agent adhésif thermofusible à prise physique selon la revendication 1 ou 2, **caractérisé en ce que** le graphite expansé se présente dans l'agent adhésif thermofusible (13) sous la forme de particules du graphite expansé à structure lamellaire stratifiée.

4. Agent adhésif thermofusible à prise physique selon la revendication 3, **caractérisé en ce que** les particules présentent un rapport d'aspect situé dans une plage de 500(:1) à 1000(:1).

5. Agent adhésif thermofusible à prise physique selon l'une quelconque des revendications 1 à 4, **caractérisé par** au moins un polymère de base de l'un des groupes suivants :
les polyamides (PA) et leurs copolymères (Co-PA), les polyéthylènes (PE) et leurs copolymères (Co-PE), les polypropylènes (PP) et leurs copolymères (Co-PP), les polyalphaoléfines amorphes (APAO) et leurs copolymères (Co-APAO),
les copolymères d'éthylène-acétate de vinyle (EVAC/EVA) les élastomères de polyester (TPE-E) et leurs copolymères (Co-TPE-E),
les élastomères de polyuréthane (TPE-U) et leurs copolymères (TPE-U),
les polyuréthanes thermoplastiques (TPU) et leurs copolymères (Co-TPU)
le polytétrafluoroéthylène (PTFE), le polylactide (PLA) et ses copolymères (Co-PLA),
le polyhydroxybutyrate (PHB) et ses copolymères (Co-PHB) le polyhydroxyvalérate (PHV) et ses copolymères (Co-PHV), les copolymères de PHB et de PHV (PHBV).

6. Agent adhésif thermofusible à prise physique selon l'une quelconque des revendications 1 à 5, **caractérisé en ce que** l'agent adhésif thermofusible contient en tant que constituants supplémentaires des plastifiants et / ou des stabilisants et / ou des antioxydants et / ou des régulateurs de viscosité et / ou un additif destiné à augmenter le caractère collant et / ou la résistance.

7. Agent adhésif thermofusible à prise physique selon l'une quelconque des revendications 1 à 6, **caractérisé en ce que** l'agent adhésif thermofusible (13) est confectionné sous la forme de filaments, de fibres discontinues (13.1) ou d'un produit textile plan (13.2, 13.4), d'un granulé, d'une poudre, d'un film ou d'un bloc.

8. Utilisation d'un agent adhésif thermofusible (13) selon l'une quelconque ou plusieurs des revendications 1 à 7, pour assembler plusieurs pièces destinées à être jointes en matières identiques ou différentes, par irradiation des pièces destinées à être jointes qui doivent être assemblées avec des faisceaux micro-ondes dans une plage de fréquences de 300 MHz à 300 GHz, pour chauffer l'agent adhésif thermofusible (13) à sa température de mise en œuvre.

9. Utilisation selon la revendication 8, **caractérisée en ce que** les pièces destinées à être jointes sont des couches d'un stratifié (2) que l'on assemble dans une presse à double bande (1) par les étapes suivantes, consistant à
- appliquer l'agent adhésif thermofusible (13) sur au moins l'une des couches (2.1) avant d'introduire les couches (2.1, 2.2, 2.3) qui doivent être assemblées dans la presse à double bande (1),
- déplacer les couches (2.1, 2.2, 2.3) qui doivent être assemblées, d'abord à travers une zone de chauffage et de pressage (8) en ensuite, à travers une zone de refroidissement (9) de la presse à double bande (1),
- irradier les couches (2.1, 2.2, 2.3) qui doivent être assemblées avec les faisceaux micro-ondes dans la zone de chauffage et de pressage (8).

10. Utilisation selon la revendication 9, **caractérisée en ce que** l'on applique l'agent adhésif thermofusible (13) sous la forme de filaments, de fibres discontinues (13.1) ou d'un produit textile plan (13.2, 13.4).

11. Utilisation selon l'une quelconque des revendications 9 ou 10, **caractérisée en ce que** l'on applique l'agent adhésif thermofusible (13) sur l'au moins une couche (2.1) dans une quantité comprise entre 10 g/m² et 500 g/m².

12. Utilisation selon la revendication 8, **caractérisée en ce que** l'on assemble les pièces destinées à être jointes (20) dans une presse à double bande (1) par les étapes suivantes, consistant à
- mélanger l'agent adhésif thermofusible (13) avec les pièces destinées à être jointes (20) qui doivent être assemblées en un mélange (19),
- appliquer le mélange (19) sur au moins une bande de presse (6) inférieure de la presse à double bande (1),
- déplacer le mélange (19), d'abord à travers une zone de chauffage et de pressage (8) et ensuite à travers une zone de refroidissement (9) de la presse à double bande (1),
- irradier le mélange avec des faisceaux micro-ondes dans la zone de chauffage et de pressage (8).
